(19) Europäisches Patentamt / European Patent Office / Office européen des brevets

(11) **EP 3 667 121 B1**

(12) **EUROPEAN PATENT SPECIFICATION**

(45) Date of publication and mention
of the grant of the patent:
**08.06.2022 Bulletin 2022/23**

(21) Application number: **19216175.0**

(22) Date of filing: **13.12.2019**

(51) International Patent Classification (IPC):
**F16H 1/32** *(2006.01)* **F16H 1/46** *(2006.01)*

(52) Cooperative Patent Classification (CPC):
**F16H 1/32;** F16H 1/46; F16H 2001/327

(54) **MECHANICAL VELOCITY REDUCTION GEAR**

MECHANISCHES GESCHWINDIGKEITSVERRINGERUNGSGETRIEBE

ENGRENAGE DE RÉDUCTION DE VITESSE MÉCANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2018 IT 201800011139**

(43) Date of publication of application:
**17.06.2020 Bulletin 2020/25**

(73) Proprietor: **IMT Engineering S.r.l.**
**20064 Gorgonzola (MI) (IT)**

(72) Inventor: **MAZZALI, Ivo**
**20064 Gorgonzola (MI) (IT)**

(74) Representative: **Cammareri, Emanuele**
**Bresner Cammareri Intellectual Property-BCIP**
**Via Aurelio Saffi, 23**
**20123 Milano (IT)**

(56) References cited:
**EP-A1- 2 400 184** **EP-A2- 0 300 108**
**EP-A2- 0 738 841**

## Description

### TECHNICAL FIELD

The present invention to the field of mechanics. In particular, the invention relates to a mechanical device for reducing the rotation velocity from the drive shaft to the output shaft with consequent torque elevation.

### BACKGROUND

As is known, motors are widely used in almost every technological area in order to set in motion mechanical elements. In particular, electric motors are characterized by small dimensions, lightness, high reliability and, at the same time, they do not release polluting and/or toxic emissions during their operation.

These characteristics have allowed using electric motors in particular coupled with mechanical gear reductions for use in various fields, for example in the industrial, robotic, medical, aeronautical, aerospace, household appliance field etc.

In detail, each electric motor is designed to operate optimally by putting its shaft in rotation at a specific rotation velocity (or within a range of specific values) and delivering a predefined maximum torque, which may be not optimal for driving one specific application.

Therefore, in the art there have been gear reduction devices, interposed between the motor and the mechanical element to be driven, suitable for adjusting the velocity and torque delivered by the motor according to the specific requirements of the mechanical element.

Different types of gear reduction devices based on different mechanisms are known, such as gear reduction devices based on cycloidal, epicycloidal or *harmonic drive* structures.

However, these solutions have a considerable volume, since they consist of both fixed and mobile parts in large numbers - for example, in the case of cycloidal and epicycloidal structures - or of high costs and limited technical characteristics - in the case of *harmonic drives.*

Volume and the large number of parts considerably increase the weight and volume of the gear reduction device and, consequently, the weight and volume of the overall machinery comprising the same. Moreover, the large number of moving parts makes the gear reduction device noisy and likely to disperse a part of the power transmitted by the motor into heat, with a relative loss of efficiency.

On the other hand, gear reduction device of high complexity lead to the increase in production complexity and the cost of the entire machinery in which these gear reduction devices are included.

Examples of reduction gear devices known in the art are disclosed in the European patent applications EP 0300108, EP 0738841 and EP 2400184.

Therefore, the need for a gear reduction device with a compact, efficient, simple configuration is felt in the industry.

### OBJECTS AND SUMMARY OF THE INVENTION

An object of the present invention is to overcome the disadvantages of the prior art.

In particular, it is an object of the present invention to provide a compact, simple and efficient gear reduction device.

Moreover, it is an object of the present invention to provide a gear reduction device comprising a reduced number of parts, in particular of dynamic parts.

These and other objects of the present invention are achieved by a device incorporating the features of the accompanying claims, which form an integral part of the present description.

In one embodiment, the reduction gear of angular velocity comprising: an input shaft configured to be coupled with a drive shaft; an output shaft configured to transmit an angular velocity to a mechanism, the output shaft being coaxial with the input shaft and a system of components adapted to convert an input angular velocity of the input shaft into an output angular velocity of the output shaft. The input shaft comprises a first cam and a second cam having circular cross-sections that are mutually separated along a main axis of the input shaft from an intermediate portion, the first cam having an axis spaced apart from a main axis of the input shaft of a first distance in a first direction transversal to said main axis, the second cam having an axis spaced apart from the main axis of the input shaft of a second distance in a second direction different from the first direction.

Moreover, the mechanical system comprises an input gear wheel mounted on the first cam, and an output gear wheel mounted on the second cam. Advantageously, the input gear wheel comprises a plurality of first housings arranged radially with respect to a center of the input gear wheel, each first housing having a respective extension axis, and the output gear wheel mounted on the second cam and comprising a plurality of second housings arranged radially with respect to a center of the output gear wheel, each second housing having a respective extension axis.

The mechanical system further comprises a plurality of pins, each having a first end inserted into a respective first housing of the input gear wheel and a second end opposite the first end inserted into a respective second housing of the output gear wheel, the first end and the second end of each pin being free to move within the first housing and the second housing, respectively, thus tilting an axis of the pin with respect to the extension axes of the first housing and the extension axes of the second housing and wherein the rotation of the input gear wheel drives the output gear wheel through the pins.

The gear reduction according to the present invention has a very compact structure with a reduced number of moving mechanical parts with coaxial input and output shafts which however allow obtaining a considerable and efficient reduction of the angular velocity of the output shaft with respect to an angular velocity imparted to the input shaft.

In one embodiment, the first end and the second end of each pin are free to move inside the first housing and the second housing, respectively, by tilting the axis of the pin by a value comprised between 2° and 8°, preferably 6°, with respect to respective extension axes of the first housing and of the second housing.

These inclination values allow having a particularly reliable and regular movement of the elements of the mechanical system.

In one embodiment the first end and the second end of each pin are free to perform a rotary movement within the respective first housing and second housing.

This rotary motion allows fluidly transmitting and adjusting the motion from the input gear wheel to the output gear wheel although they are mounted on cams oriented in different directions.

In one embodiment, at least one between the first end and the second end of each pin is shaped like a spherical cap. Moreover, each corresponding first housing or second housing is shaped like a cup with size configured to be fitted by the corresponding first or second end.

Thanks to this structure, the contact surface between the ends of the pins and the respective housings allows an effective distribution of forces and torques between the pins and the gear wheels.

In one embodiment, the intermediate portion of the input shaft has a circular cross-section coaxial with the main axis of the input shaft. Moreover, each pin comprises a central portion with a spherical cup or two-base spherical segment shape, wherein the pin has therefore a three-lobe shape, that is, a trilobate pin. Advantageously, the mechanical system comprises a pair of disks adapted to be fitted on the intermediate portion, the disks comprising a plurality of demi-housings arranged concentrically and radially and such as to define housings configured for receiving the central portion of a respective pin when the disks are coupled together in such a way to allow free movement of the central portion such as to incline the axis of the pin with respect to an extension axis of the demi-housings.

Thanks to this composition, the mechanical system is particularly robust and subject to reduced vibrations during dynamic activity. Moreover, the interaction between the central body of the pin and the disks gives particular regularity to the oscillating motion of the pins themselves during the operation of the gear reduction.

In one embodiment, the axis of the first cam and the axis of the second cam are spaced apart from the main axis of the shaft input in opposite directions one with respect to the other.

This configuration guarantees a particular effectiveness to the reduction obtained by means of the operation of the gear reduction.

In one embodiment, the mechanical system comprises an input annular gear which is stationary, the input annular gear having a pitch diameter greater than the pitch diameter of the input gear wheel and thus a greater number of teeth than the input gear wheel. Moreover, part of the teeth of the input gear wheel engage in a corresponding part of the wheel input annular gear during an eccentric rotation of the input gear wheel around the main axis of the input shaft.

In this way it is possible to obtain a first reduction with respect to the angular velocity applied to the input shaft with an extremely compact method

In one embodiment, the reduction gear comprising a casing configured to at least partially house the input shaft, the output shaft and the mechanical system. The input annular gear is integrated into a portion of the casing.

Thanks to this structure it is possible to effectively limit the size of the gear reduction without losing efficiency.

In one embodiment, the mechanical system comprises a crown wheel or output annular gear mounted on one end of the output shaft, the output annular gear having a pitch diameter greater than a pitch diameter of the output crown wheel and a greater number of teeth than the output crown wheel. Moreover, part of the teeth of the output gear wheel engage a corresponding part of the output annular gear during an eccentric rotation of the output gear wheel around the main axis of the input shaft.

In this way it is possible to obtain a second extremely compact reduction with respect to the angular velocity applied to the input shaft and transmit it directly to the output shaft.

In one embodiment, the output shaft comprises a cavity configured to rotatably house one end of the input shaft.

In this way, the shafts maintain a coaxial alignment with a simple, robust and particularly compact structure.

In one embodiment, the teeth of the gear wheels and of the annular gears are defined by the parametric form with respect to a system of Cartesian coordinates $(x;y)$ as a function of a parameter $\theta$:

EP 3 667 121 B1

$$\begin{cases} x(\theta)=\dfrac{l}{2}\left(\cos\theta-\dfrac{t}{k}\cos(k\theta)\right)+\dfrac{a\left[t\cos(k\theta)-\cos\theta\right]}{2\sqrt{1+t^2-2t\left[\sin\theta\sin(k\theta)+\cos\theta\cos(k\theta)\right]}} \\ y(\theta)=\dfrac{l}{2}\left(\sin\theta-\dfrac{t}{k}\sin(k\theta)\right)+\dfrac{a\left[t\sin(k\theta)-\sin\theta\right]}{2\sqrt{1+t^2-2t\left[\sin\theta\sin(k\theta)+\cos\theta\cos(k\theta)\right]}} \end{cases}$$

where $l$ corresponds to the diameter of the pitch circle of the annular gear, $k$ corresponds to the number of teeth of the annular gear, a corresponds to the tooth diameter of the teeth of the output annular gear, t is an adjustment parameter of the teeth curve.

Alternatively, the teeth of the gear wheels and of the annular gears are defined can be defined in a complex form by the norm p, still as a function of the parameter $\theta$:

$$\begin{cases} \rho(\theta)=\dfrac{l}{2}\lambda(\theta)+\dfrac{a}{2}e^{i\left[arg\left(\dfrac{d\lambda(\theta)}{d\theta}\right)+\dfrac{\pi}{2}\right]} \\ \lambda(\theta)=e^{i\theta}-\dfrac{t}{k}e^{ik\theta} \end{cases}$$

In this way the teeth have a profile able to softly engage without kickbacks, drastically limiting the noise level of the gear reduction.

Preferably, the adjustment parameter t is selected in the interval between 0 and 1, while $\theta$ is comprised between 0 (included) and 2n (excluded).

The selection of the values t and $\theta$ in these intervals allows obtaining optimal profiles of the teeth of the annular gears and of the gear wheels.

Further features and advantages of the present invention will be more apparent from the description of the accompanying drawings.

## BRIEF DESCRIPTION OF THE DRAWINGS

The invention will be described below with reference to some examples, provided for explanatory and non-limiting purposes, and illustrated in the accompanying drawings. These drawings illustrate different aspects and embodiments of the present invention and, where appropriate, reference numerals illustrating similar structures, components, materials and/or elements in different figures are indicated by similar reference numbers.

Figure 1 is an exploded view of the gear reduction according to an embodiment of the present invention and of an electric motor suitable for driving it;

Figure 2 is a side view of the gear reduction of Figure 1 assembled to the electric motor;

Figure 3 is a side sectional view of the gear reduction of Figure 1 along a section plane comprising an axis of general extension of the gear reduction;

Figure 4A is a plan view from below of a front flange of the reduction gear of Figure 1;

Figure 4B is a side sectional view along the IV-IV axis of the front flange of Figure 4A;

Figure 5A is a plan view of a central body of the reduction gear of Figure 1;

Figure 5B is a sectional view along the trace of V-V section of the central body of Figure 5A;

Figure 6A is a plan view from below of a rear flange of the reduction gear of Figure 1;

Figure 6B is a side sectional view along the VI-VI axis of the front flange of Figure 6A;

Figure 7 is a side view of the input shaft of the reduction gear of Figure 1 with details in cross-section thereof;

Figure 8A is a plan view of an input gear wheel of the reduction gear of Figure 1;

Figure 8B is a side sectional view along the VIII-VIII axis of the input gear wheel of Figure 8A;

Figure 9 is a side view of a pin of the reduction gear of Figure 1;

Figure 10A is a plan view of a disk of the reduction gear of Figure 1;

Figure 10B is a side sectional view along the X-X axis disk of Figure 10A;

Figure 11A is a plan view from below of an output gear wheel of the reduction gear of Figure 1;

4

Figure 11B is a side sectional view along the XI-XI axis of the output gear wheel of Figure 11A;
Figure 12A is a side view of the assembly of the input shaft on which moving parts of the reduction gear of Figure 1 are mounted;
Figure 12B is a side sectional view along the XII-XII axis of the assembly view of Figure 12A.
Figure 13A is a plan view of an annular gear of the reduction gear of Figure 1;
Figure 13B is a side sectional view along the XIII-XIII axis of the annular gear of Figure 13A;
Figure 14A is a plan view of an output shaft of the reduction gear of Figure 1, and
Figure 14B is a side sectional view along the XIV-XIV axis of the output shaft of Figure 14A.

## DETAILED DESCRIPTION OF THE INVENTION

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to", unless otherwise indicated.

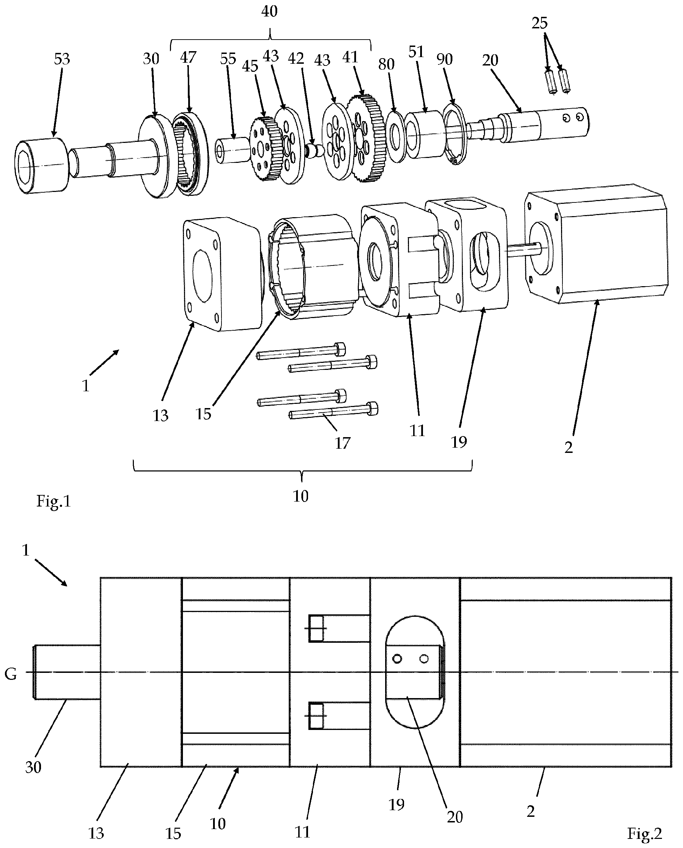

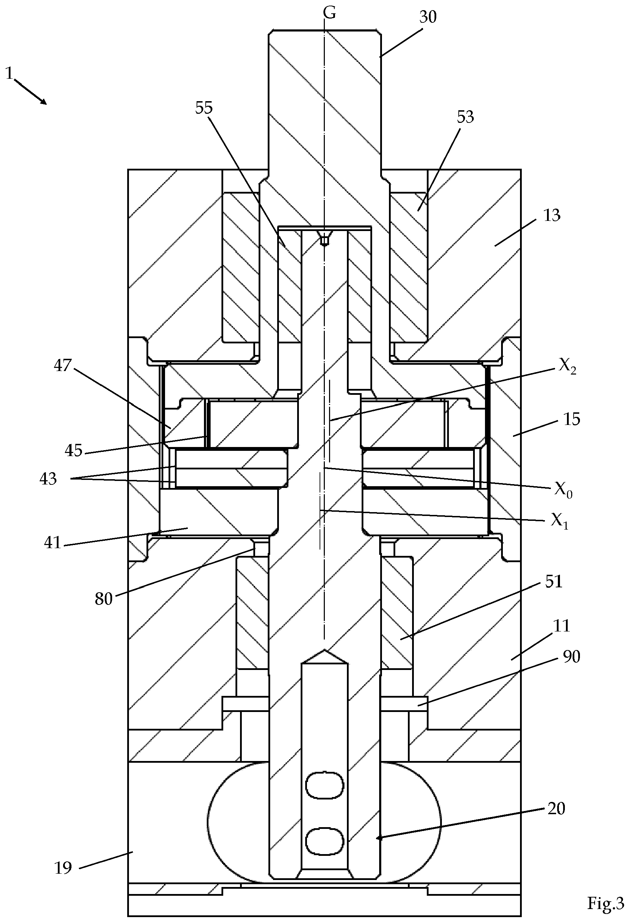

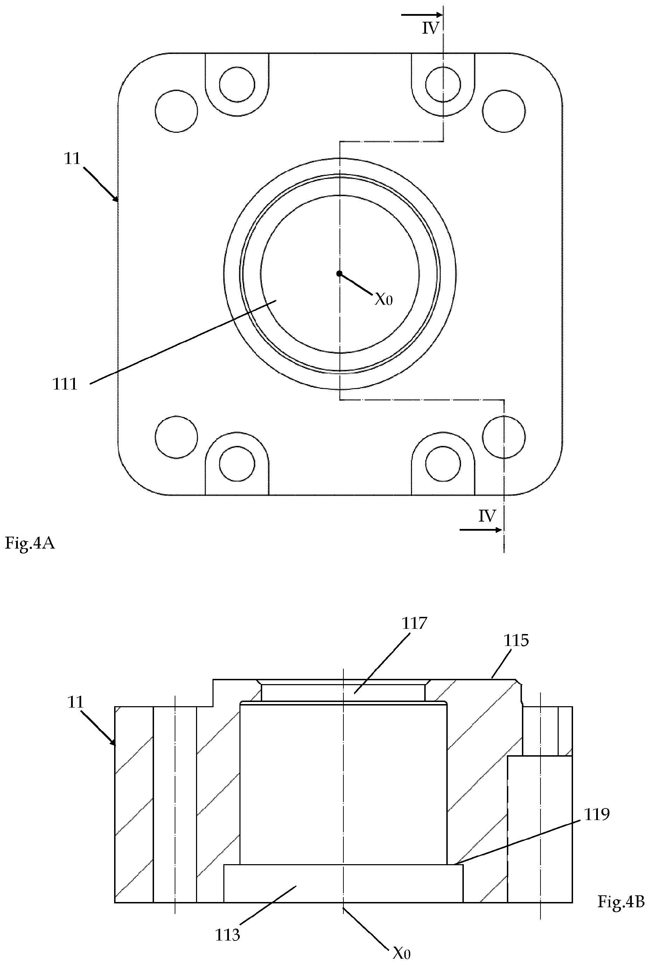

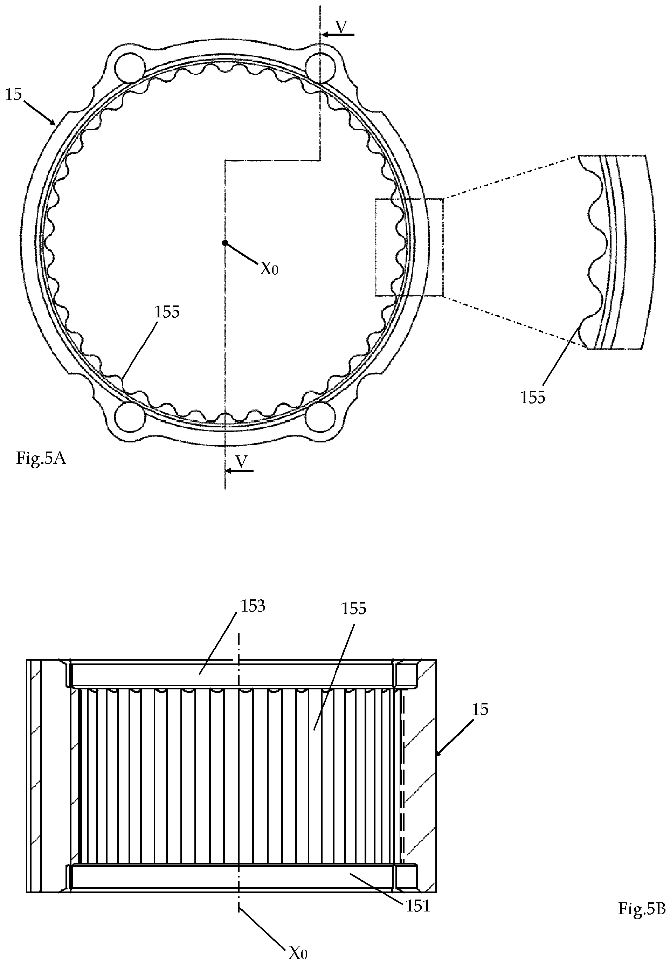

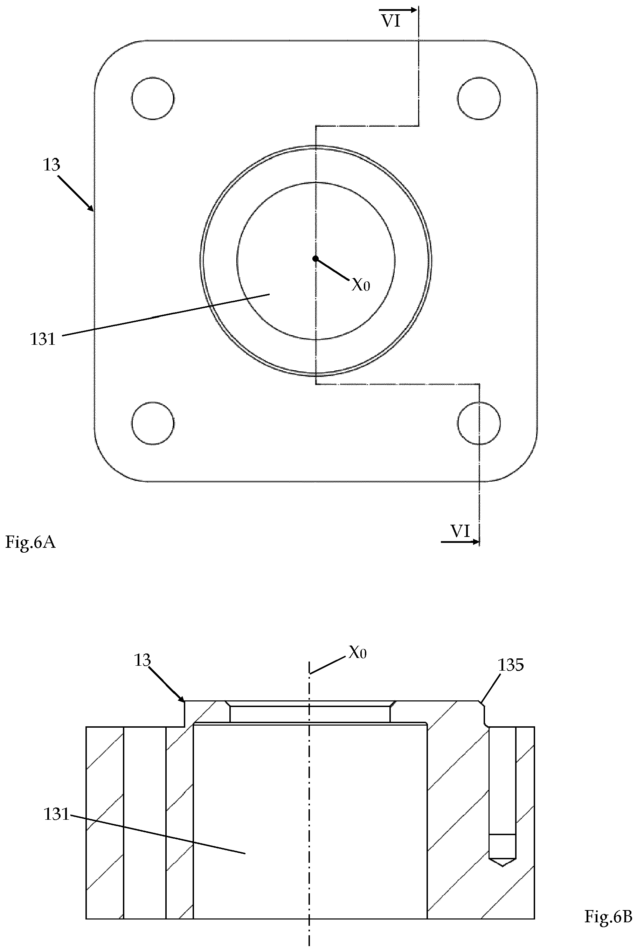

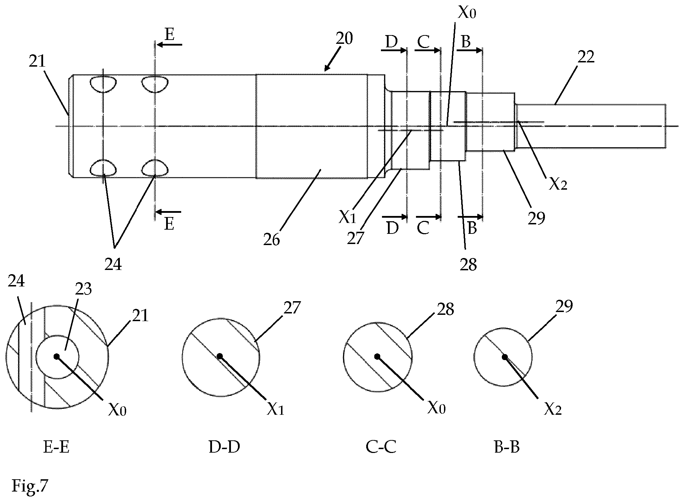

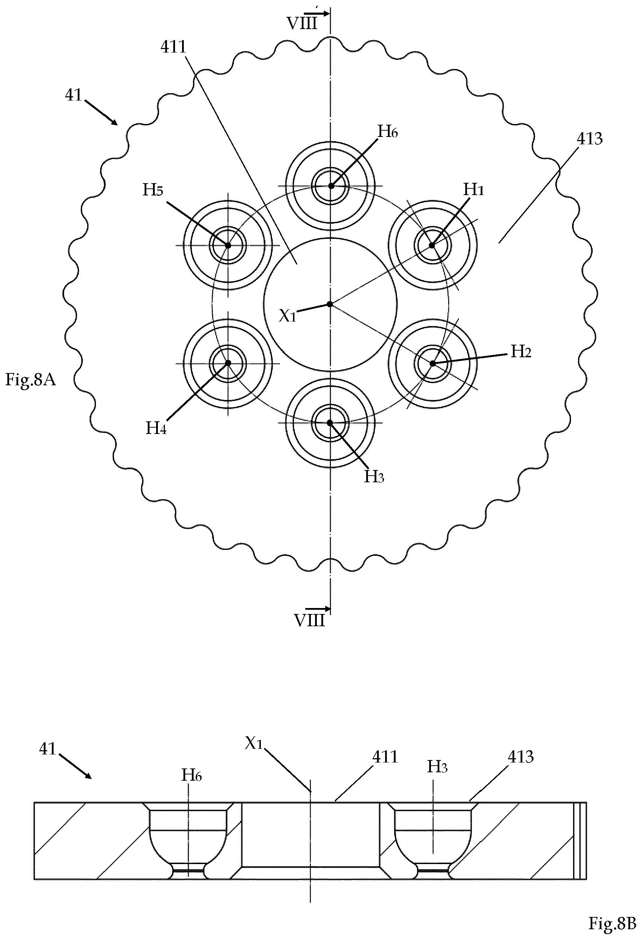

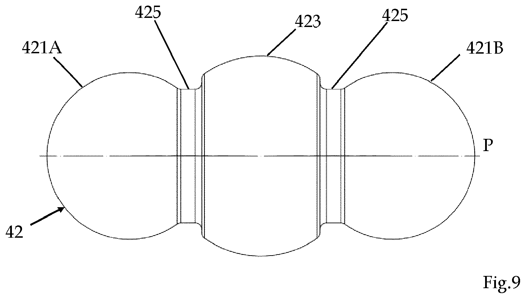

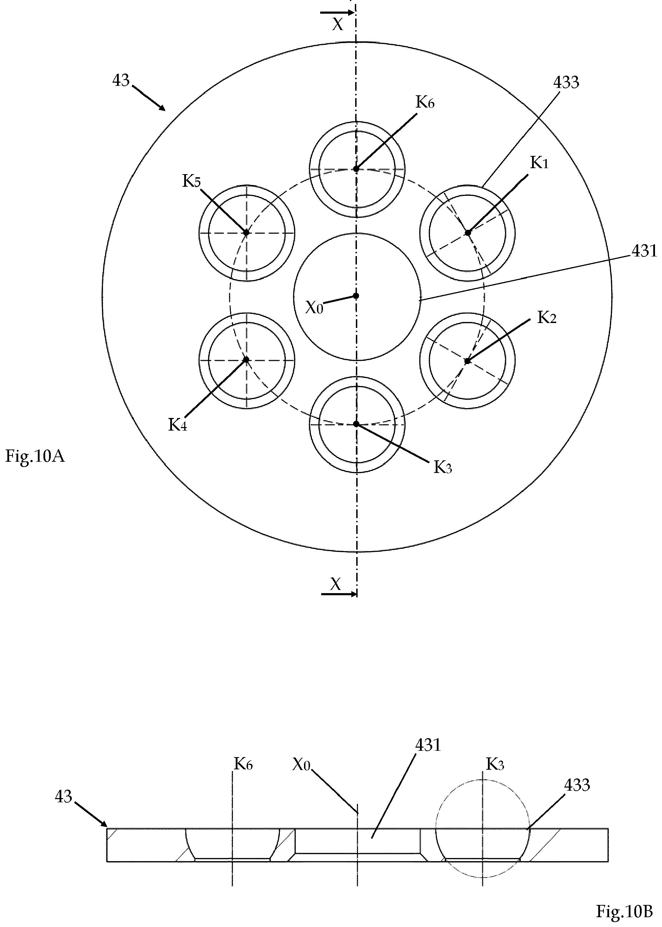

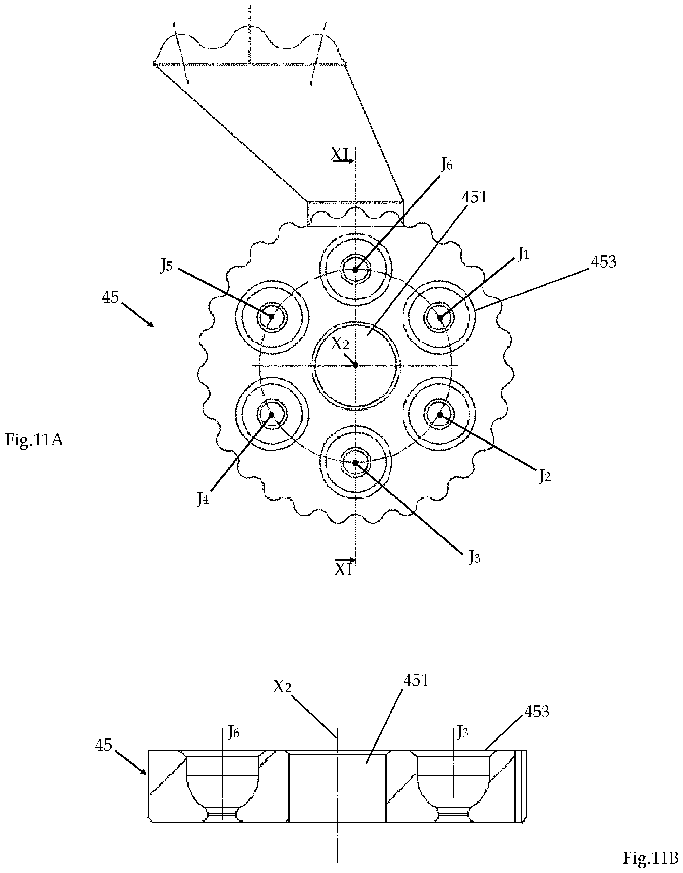

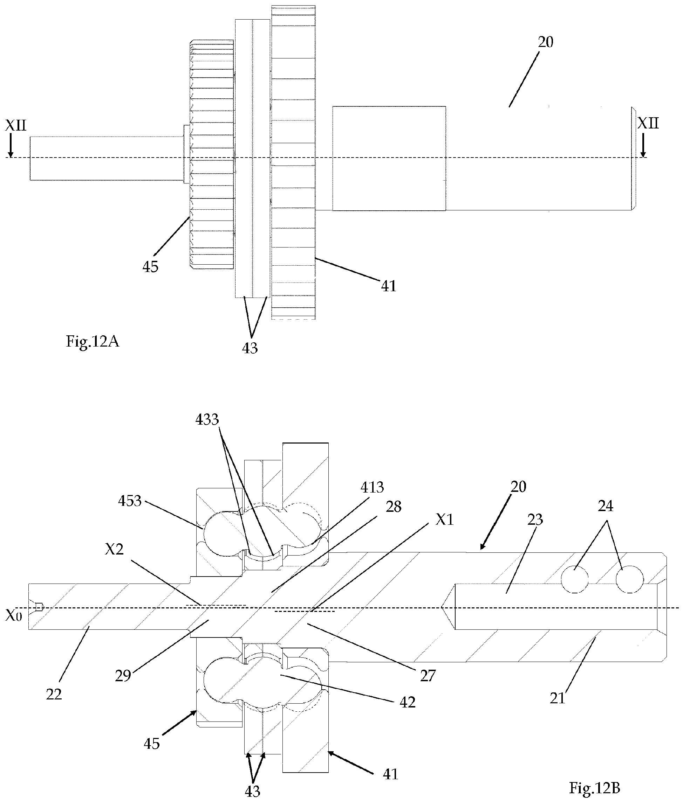

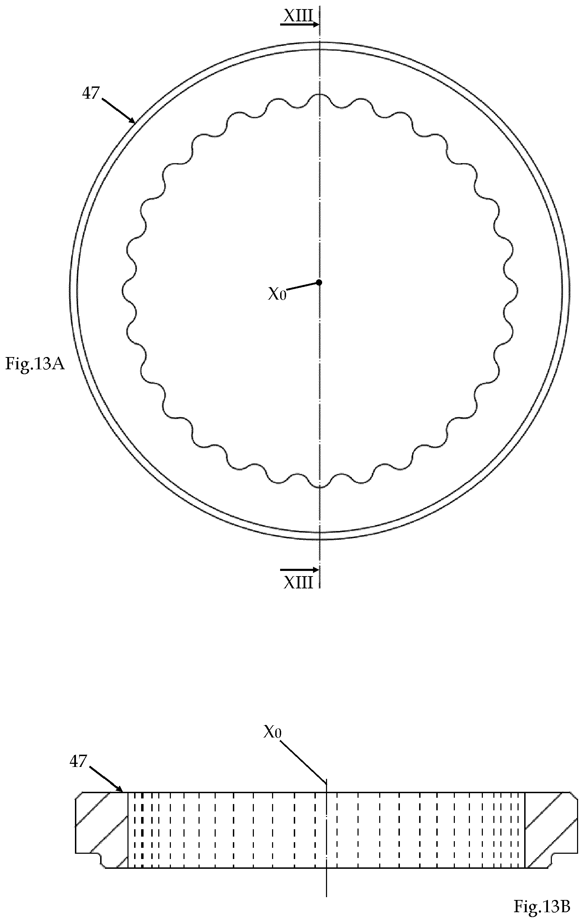

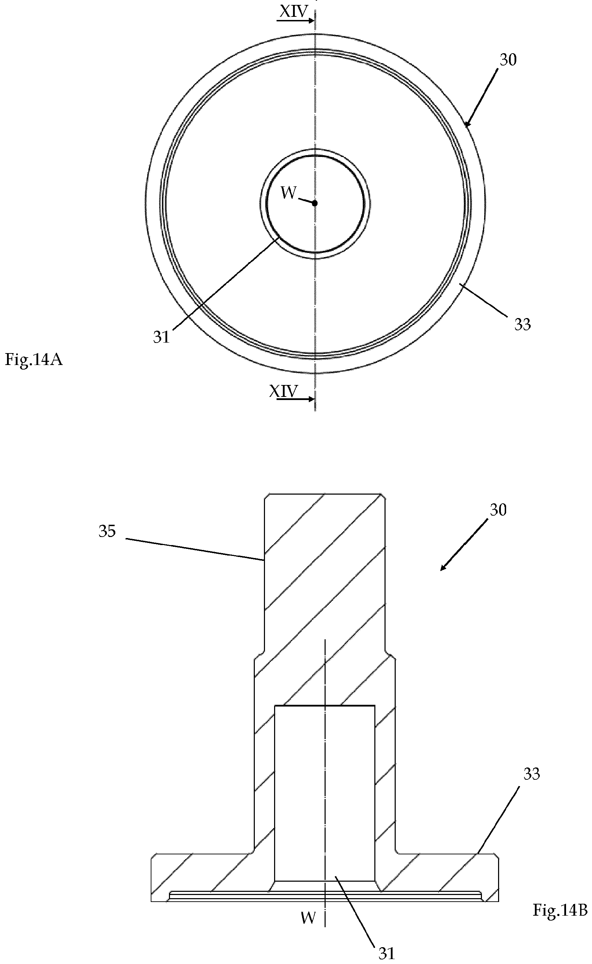

With reference to the appended figures 1 - 14B, a gear reduction device 1 according to one embodiment of the present invention is described. In general, the gear reduction device 1 is configured to be operatively coupled to an electric motor 2 (for example *brushless, torque* or step-by-step), as described below.

The gear reduction 1 comprises a casing 10 from which an input shaft 20 and an output shaft 30 protrude. The casing 10 also houses a mechanical system 40 which operatively connect the input shaft 20 and the output shaft 30 between them.

In the example of the Figures 1 - 6B, the casing 10 comprises a front flange 11, a rear flange 13 and a central body 15 interposed between the flanges 11 and 13. The flanges 11 and 13 both have a box-like structure with two main surfaces, of which one is internal - that is, not exposed to the external environment during use - and one is external - that is, exposed to the external environment in use -, separated by four side surfaces. Moreover, each flange 11 and 13 comprises a corresponding through hole 111 and 131 between the main surfaces. The through holes 111 and 131 are adapted to receive so as to allow the rotation thereof partly of the input shaft 20 and partly of the output shaft 30, respectively.

Considering the front flange 11, the through hole 111 comprises a first stretch 113 and a second stretch 117 consecutive to each other. The first stretch 113 extends from a main outer surface of the flange 11, while the second stretch extends from the first stretch up to the inner surface of the flange 11. The first stretch 113 is defined by a first radius while the second stretch 117 is defined by a second radius, lower than the first radius. Therefore, there is a shoulder 119 at the interface between the two stretches 113 and 117. The second stretch 117 is configured to house an input roller bearing 51 which abuts on a second shoulder from an annular wall that delimits an opening - which has a diameter smaller than the radius of the second stretch 117 - of the through hole 111 facing the main inner surface of the front flange 11. A fifth wheel 80 is inserted in the first stretch abutting on the shoulder 119 and is kept locked in position by a seeger ring 90 - or a similar locking element. The fifth wheel 80 axially maintains the input shaft 20 inside the through hole 111.

Otherwise, the through hole 131 of the rear flange 13 has a cylindrical shape with a constant diameter and is configured to receive an output roller bearing 53 which abuts on a shoulder defined on a second shoulder defined by an annular wall that delimits at an opening - which has a diameter lower than the diameter of the through hole 131 - on the inner surface of the through hole 131 facing the main surface of the rear flange 13 not exposed to the external environment during use.

Preferably, both flanges 11 and 13 comprise a respective protruding portion 115 and 135 protruding from the respective main inner surfaces and coaxial with the respective through holes 111 and 131. A side wall of these protruding portions 115 and 135 - radially distal to the respective through holes 111 and 131 - is threaded so as to allow a screwing of each flange 11 and 13 to the central body 15. In other embodiments, the flanges 11 and 13, and the central body 15 can provide for a different coupling system such as, for example, by snap or bayonet fitting.

The central body 15 has a tubular structure with an inner surface comprising a pair of threaded portions 151 and 153 at the edges of the central body which delimit opposite openings. The threaded portions 151 and 153 are adapted to screw onto the corresponding protruding portions 115 and 135 of the flanges 11 and 13, as mentioned above.

Between the threaded portions 151 and 153, the inner surface of the central body 15 comprises a gear portion 155. In particular, the gear portion 155 defines an input annular gear with teeth designed to engage with the teeth of an input wheel 41 of the mechanical system 40 as described below. Moreover, the volume delimited by the central body 15 is configured to receive the mechanical system 40 and portions of the shafts 20 and 30, as described below.

In use the flanges 11 and 13 are screwed to the central body 15 to form the casing 10. Preferably, flanges 11 and 13, and the central body 15 comprise one or more through holes, possibly threaded, suitable to be coaxial to each other once the flanges 11 and 13, and the central body are coupled together, so as to receive a respective screw 17, or a similar fastening element such as a tie-rod. In this way it is possible to ensure a particularly stable and reliable coupling between the components of the casing 10 even in the case of high intensity stresses.

The input shaft 20 has an elongated shape along a main axis X0 and extends from a first end 21 to a second end 22.

At the first end 21 a hole 23 is formed which is configured to receive a portion of the drive shaft of the electric motor 2. Preferably, the hole 23 is formed coaxially with the main axis X0 of the input shaft 20.

In the example considered in the Figures 1, 2 and 7, two through holes 24 are formed in a direction transverse to the main axis X0 of the input shaft 20 and spaced apart radially therefrom. The holes 24 are facing the hole 23 so as to allow the drive shaft of the electric motor 2 to be locked in the hole 23 by means of a pin 25 fitted into each through hole 24.

Continuing further towards the second end 22, the input shaft 20 comprises a portion 26 configured to be fitted in the roller bearing 51 so as to allow the rotation of the input shaft 20 inside the body 10.

The input shaft 20 therefore comprises a portion with variable sections which comprises a first cam 27, a coaxial (intermediate) portion 28 and a second cam 29. In the embodiment shown, the first cam 27, the coaxial portion 28 and the second cam 29 all have a circular cross-section, with the first cam 27 having a radius greater than the radius of the coaxial portion 28 and of the second cam 29, while the coaxial portion 28 has a radius greater than the radius of the second cam 29.

Moreover, the first cam 27 has a central axis X1 spaced by a value $\Delta X1$ in a first direction with respect to the main axis X0 of the input shaft 20, the second cam has a central axis X2 spaced by a value $\Delta x2$ in a second direction with respect to the main axis X0 of the input shaft 20; preferably, although not limitatively, the first direction is opposite to the second direction. Otherwise, the central axis of the coaxial portion 28 is coaxial with the main axis X0 of the input shaft 20.

Finally, the second end 22 of the input shaft 20 is formed with dimensions suitable for fitting a roller bearing 55 housed inside a cavity 31 of the output shaft 30 described below.

An input gear wheel 41 of the mechanical system 40 comprises a central through-hole 411 so configured that it allows the input gear wheel 41 to be mounted, preferably fitted, on the first cam 27.

In addition, the input gear wheel 41 comprises a plurality of housings 413 arranged radially around the central through hole 411 and equidistant from the center thereof. Preferably the housings are in a number comprised between four and eight, in particular six as in the example considered. In other words, the axes of the housings 413 are aligned on a concentric circumference to the input gear wheel 41, with a predetermined pitch diameter.

In the preferred embodiment, the housings 413 of the input gear wheel have a cup-like shape, with a circular cross-section, and with a main opening formed on a first main surface of the input gear wheel 41 and, preferably, a secondary opening formed on the opposite main surface of the input gear wheel 41 and of reduced size with respect to the main opening. Moreover, each housing 413 extends between the two main surfaces along a respective axis H1-6 which is, preferably parallel to the main axis X0 of the input shaft 20.

In particular, each housing is configured to receive a respective head 421A or 421B of a corresponding pin 42 (described below) through the larger sized opening. Otherwise, the secondary opening is provided for making the housings 413 by means of a single operation of fine blanking of a steel plate which allows making the entire input gear wheel 41.

The teeth 415 of the input gear wheel 41 have a substantially cylindrical shape and are able to engage the teeth formed on the central body 15 of the casing 10. In particular, the pitch radius of the input gear wheel 41 is smaller than the pitch radius of the central body 15 so that only a part of the teeth of the input gear wheel 41 engages a corresponding part of the teeth of the gear portion 155 of the central body 15 during the rotation of the input shaft 20. Moreover, the input gear wheel 41 has a lower number of teeth than the number of teeth formed on the central body. For example, the input gear wheel 41 comprises one tooth or two teeth less than the number of teeth of the gear portion 155 of the central body 15.

In the exemplary embodiment, the pins 42 as already mentioned comprise a pair of heads and a central portion 423 aligned along a respective axis P. The central portion 423 has the shape of a two-base sphere segment of corresponding dimensions from which the two heads 421A, 421B extend in opposite directions along an axis of the pin. Each head has a shape of a spherical cap of a sphere with a radius smaller than the radius of the sphere segment of the central portion 423. Moreover, each head 421A, 421B is coupled to a respective base of the central portion 423 by means of a corresponding substantially cylindrical connection portion 425.

The trilobate pins 42 thus described can be formed by a single cold molding operation. In this way, it is possible to obtain a pin 42 formed by a piece of metal, for example steel, comprising continuous fibers in the longitudinal direction for the entire length of the pin 42, giving it particular strength.

The mechanical system 40 also comprises a pair of disks 43 which is configured to be fitted on the coaxial portion 28 of the input shaft 20. Each disk comprises a central through hole 431 configured to allow the disk 43 to be mounted, preferably fitted, on the coaxial portion 28 of the input shaft 20.

Moreover, each disk 43 comprises a plurality of demi-housings 433, in a number corresponding to the housings 413 of the input gear wheel 41, arranged radially around the central through hole 431 and equidistant from the center thereof. The demi--housings 433 are formed on the disk 43 along a circumference coaxial to the center of the disk 43 itself. The pitch diameter on which the demi-housings 433 of the disks 43 are arranged corresponds to the pitch diameter on which the housings 413 of the input gear wheel 41 are arranged.

Each demi-housing 433 defines a cavity shaped like a two-base sphere segment with dimensions suitable for receiving half of the central part 423 of a corresponding pin 42 described below. For this purpose, each demi-housing 433 has a larger opening with a diameter corresponding to the diameter of the central part 423 of the pin 42, while a smaller opening - opposite to the larger opening - has a diameter such as to allow the passage of a head 421A, 421B of the pin 42. Moreover, each demi-housing 433 extends between the two main surfaces of the disk 43 along a respective axis K1-6 which is, preferably parallel to the main axis X0 of the input shaft 20.

In use, both disks 43 are mounted on the coaxial portion 28 with the larger openings of the respective housings arranged adjacent to each other so as to form a two-base sphere segment, where the two bases correspond to the smaller openings of each demi-housing 433. The overall housing thus formed is configured to fit substantially the central portion 423 of a corresponding pin 42 allowing a rotation of the central part 423 - and, therefore, of the entire pin - around the axis of the demi-housings 433.

Also in this case, the presence of opposed openings on both the main surfaces of each disk 43 allows making this part by means of a single operation of fine blanking of a steel plate.

An output gear wheel 45 of the mechanical system 40 comprises a central through hole 451 which allows the output gear wheel to be mounted, preferably fitted, from the second cam 29 of the input shaft 20.

Similarly to the input gear wheel 41, the output gear wheel 45 comprises a plurality of housings 453, in a number corresponding to the housings 413 and to the demi-housings 433, arranged radially around the central through hole 451 and equidistant from the center thereof. In other words, the housings 453 are aligned on a coaxial circumference in the center of the output gear wheel 45. The circumference on which the housings 453 of the output gear wheel are arranged has a pitch diameter corresponding to the pitch diameter on which the housings 413 of the input gear wheel 41 are arranged.

As in the case of the housings 413, the housings 453 have a cup-like shape, with a circular cross-section, and with a main opening formed on a first main surface of the output gear wheel 45 and, preferably, a secondary opening formed on the main opposite surface of the output gear wheel 45 and of reduced size with respect to the main opening. Moreover, each housing 453 extends between the two main surfaces of the output gear wheel 45 along a respective axis J1-6 which is parallel to the main axis X0 of the input shaft 20.

In particular, each housing is configured to receive a respective head 421A, 421B of a corresponding pin 42 through the larger sized opening. Otherwise, the secondary opening is provided for making the housings 453 by means of a single operation of fine blanking of a steel plate which allows making the entire output gear wheel 45. This allows maintaining the production cost of the reduction gear 1 contained, fundamental aspect in the case of reduction gears for household appliances or other consumer products.

The teeth 455 of the gear wheel have a substantially cylindrical shape and are adapted to engage the teeth formed on an (output) annular gear 47 of the mechanical system 40 which is coupled to the output shaft 20. In particular, the pitch radius of the output gear wheel 45 is lower than the pitch radius of the annular gear 47 so that only a part of the teeth of the output gear wheel 45 engages with a corresponding part of the teeth of the annular gear 47 during rotation. Moreover, the output gear wheel 45 has a lower number of teeth than the number of teeth of the annular gear 47. For example, the output gear wheel 45 comprises one tooth or two teeth less than the number of teeth of the annular gear 47.

Preferably, the shape of the teeth of the gear wheels 41 and 45, and of the annular gears 155 and 47 can be determined in a parametric form with respect to a system of Cartesian coordinates (x;y) as a function of a parameter $\theta$, preferably $\theta \in [0; 2\pi)$:

$$\begin{cases} x(\theta) = \dfrac{l}{2}\left(\cos\theta - \dfrac{t}{k}\cos(k\theta)\right) + \dfrac{a[t\cos(k\theta) - \cos\theta]}{2\sqrt{1 + t^2 - 2t[\sin\theta\sin(k\theta) + \cos\theta\cos(k\theta)]}} \\[4mm] y(\theta) = \dfrac{l}{2}\left(\sin\theta - \dfrac{t}{k}\sin(k\theta)\right) + \dfrac{a[t\sin(k\theta) - \sin\theta]}{2\sqrt{1 + t^2 - 2t[\sin\theta\sin(k\theta) + \cos\theta\cos(k\theta)]}} \end{cases}$$

where *l* corresponds to the diameter of the pitch circle of the annular gear 155, 47, *k* corresponds to the number of teeth of the annular gear 155, 47, *a* corresponds to the tooth diameter of the teeth of the annular gear 155, 47, t is an adjustment parameter of the teeth curve.

Alternatively, the teeth of the gear wheels and of the annular gears are defined can be defined in a complex form by the standard p, still as a function of the parameter *θ*.

$$\begin{cases} \rho(\theta) = \dfrac{l}{2}\lambda(\theta) + \dfrac{a}{2}\, e^{i\left[arg\left(\frac{d\lambda(\theta)}{d\theta}\right)+\frac{\pi}{2}\right]} \\ \lambda(\theta) = e^{i\theta} - \dfrac{t}{k}\, e^{ik\theta} \end{cases}$$

In particular, tests carried out by the Applicant have identified that values of *t* comprised between 0 and 1 enable obtaining an optimal tooth profile.

The output shaft 30 extends along a respective main axis W from a first end 33 to a second end 35. The first end has a discoidal shape with a radius substantially corresponding to the radius of the annular gear 47 and a profile configured to receive the same. In particular, the annular gear 47 is constrained to the first end 33, for example the annular gear 47 is welded to the first end 33.

The second end 35 of the output shaft 30 has a substantially cylindrical elongated shape with a first portion with a cross-section configured to be fitted from the roller bearing 53 and a second portion configured to protrude from the rear flange 13 to couple with a mechanism (not shown) to be implemented.

The output shaft 30 comprises a cavity 31 coaxial with the main axis W and accessible from an opening formed in the first end 33 of the output shaft. The cavity 31 is configured to receive the roller bearing 55 and the second end 23 of the input shaft 20 inserted in the roller bearing.

The reduction gear 1 according to the described embodiment is therefore particularly compact. Advantageously, the input shaft 20 and the output shaft 30 are coaxial with the respective main axes X0 and W aligned with a general axis G of the reduction gear 1. Advantageously, the mechanical system 40 is completely contained within the central body 15 and comprises an extremely small number of moving parts, namely the gear wheels 41 and 45, the pins 42, the disks 43 and the annular gear 47.

Moreover, the reduction gear 1 can be simply assembled both manually and automatically. In detail, an assembly process may provide for inserting the roller bearing 53 into the through hole 113 of the rear flange, screwing the rear flange 13 to the central body 15. The output shaft 30 is inserted into the through hole 113 of the rear flange through the central body 15 after having been coupled to the annular gear 47 and after the bearing roller 55 is inserted into the cavity 31 of the output shaft 30. Subsequently, the input gear wheel 41 is coupled to the first cam 27 of the input shaft 20, therefore, a first disk 43 is coupled to the coaxial portion 28. At this point the pins 42 are inserted, with a head 421A, 421B of each pin 42 which is inserted into a respective housing of the input gear wheel 20, while a part of the central portion 423 of each pin 42 is received by a respective demi-housing 433 of the first disk 43. Subsequently, the second disk 43 is inserted on the coaxial portion 28 of the input shaft 20 so that each demi-housing 433 of the second disk 43 encloses the exposed part of a corresponding central portion 423 of each pin 42. Finally, the output gear wheel 45 is inserted in the second cam 29 so that each housing 453 of the output gear wheel 45 receives the exposed head 421A, 421B of a corresponding pin 42.

The assembly consisting of input shaft 20, gear wheels 41 and 45, disks 43 and pins 42 is then inserted into the central body 15 with the end 22 of the input shaft 20 which is fitted in the roller bearing 55. Preferably, the mechanical system 40, the gear portion 155 and at least the cams 27 and 29, and the coaxial portion 28 are subjected to lifetime lubrication - to operate at temperatures ranging from - 25°C to 120°C.

Subsequently, the front flange 11 is fixed to the central body 15 these can be tightened to each other and to the rear flange 13 by means of the screws 17.

Finally, the fifth wheel 80 and the Seeger ring are inserted into the first stretch 113 of the through hole 111 of the front flange 11 to hold the input shaft 20 axially but - elastically - in position.

Optionally, the reduction gear 1 can provide for a connection element, or interflange 19 which allows the casing 10 of the reduction gear to be rigidly fixed to the electric motor 2. In the preferred embodiment, the interflange 19 has a hollow box-like structure and openings on opposite sides so as to receive and house the first end 21 of the input shaft 20 protruding from the front flange 11 connected to the drive shaft of the electric motor 2 and allow rotation thereof. Moreover, side walls of the interflange can comprise respective windows 191, which reduce the weight of the interflange 19 and make it possible to observe the rotation of the input shaft 20 and of the drive shaft of the electric motor 2.

The interflange 19 can comprise a plurality of threaded through holes to allow the interflange 19 to be fixed to the electric motor 2 and to the front flange 11 by means of screws which engage these threaded through holes and corresponding threaded holes formed on the front flange 11 and on the casing of the electric motor 2.

The reduction gear 1 according to the illustrated embodiment operates in the following manner.

The input shaft 20 is rotated by the drive shaft of the electric motor 2 fixed thereto. The rotation of the input shaft puts the input gear wheel 41 in rotation, which follows an eccentric circular motion with respect to the main axis of the input shaft 20. In detail, the eccentric circular motion has a radius determined by the first distance $\Delta X1$ which separates the main axis X0 of the input shaft 20 and the axis X1 of the first cam 27. During this eccentric circular motion, part of the teeth of the input gear wheel 41 engage at each instant with a corresponding part of the teeth of the gear portion 155 of the central body 15. In this way, the input gear wheel 41 assumes a first angular velocity lower than the rotational velocity of the drive shaft of the electric motor 2.

The input wheel 41, by rotating, drives the heads 421A, 421B of the pins 42 inserted in the housings 413, in particular a part of the surfaces of the heads 421 is always in contact with a portion of the housings 413. Consequently, the pins 42 transmit the rotation to the output gear wheel 45, which is then driven by the input gear wheel 41.

In particular, during the rotation of the input gear wheel 41, the (first) head 421A, 421B of each pin 42 is free to move inside the respective housing 413 of the input gear wheel 41 in which it is inserted. Consequently, the axis P of each of the pins 42 tilts at an angle comprised between 2° and 8°, such as for example 6°, with respect to the axis H1-6 of the housings 413. In the preferred embodiment, the heads 421A, 421B of each pin 42 are able to rotate within the respective housing 413 around the axis H1-6 thereof.

Similarly, the (second) head 421A, 421B of each pin 42 - opposite to the first head 421A, 421B - is free to move inside the respective housing 453 of the output gear wheel 45 in which it is inserted due to the rotation imposed by the input gear wheel 41. Consequently, the axis P of each of the pins 42 tilts at an angle comprised between 2° and 8°, such as for example 6°, with respect to the axis J1-6 of the housings 453. In the preferred embodiment, the heads 421A, 421B of each pin 42 are able to rotate within the respective housing 413 around the axis J1-6 thereof.

In particular, the heads 421A, 421B tilt in opposite directions to each other during the rotation of the gear wheels 41 and 45.

At the same time, the central part 423 of each pin 42 is free to move inside the respective demi-housings 433 of the disks 43 from which it is enclosed due to the rotation imposed by the input gear wheel 41. In particular, the rotation of the central part 423 ensures strength to the structure and gives greater fluidity to the movement of the pins during the rotation of the input gear wheel 41 and of the output gear wheel 45 put in rotation by the first one.

In other words, during the rotation of the input shaft 20 the pins 42 define axial oscillations centered around the respective center of gravity (at the center of the central portion 423) transmitting the rotary motion between the two wheels 41 and 45. In other words, both heads 421A, 421B of each pin define a respective precession (i.e. a motion similar to that of a spinning top) during the operation of the reduction gear 1 with respect to the center of gravity of the pin 42.

In the considered example, the pin 42 has a symmetrical structure with the heads 421A and 421B having the same shape and size. Accordingly, the first head 421A and the second head 421B can be indifferently inserted in both the housings 413 of the first input gear wheel 41 and the housings 453 of the output gear wheel 45 without changing the operation of the reduction gear 1.

In this way, it is possible to transmit the rotary motion to the output gear wheel 45 although the latter is constrained to rotate with an eccentric circular motion with respect to the main axis of the different input shaft 20, for example opposite, to the first eccentric circular motion described by the input gear wheel 20. In detail, the second eccentric circular motion has a radius determined by the second distance $\Delta X2$ which separates the main axis X0 of the input shaft 20 and the axis X2 of the second cam 29.

The output gear wheel 45 during this eccentric circular motion engages part of the teeth of the input gear wheel 41 with a corresponding part of the teeth of the annular gear 47. In this way, the annular gear 47 assumes a second rotation velocity lower than the first rotation velocity of the input gear wheel 41 and of the rotation velocity of the drive shaft of the electric motor 2.

Finally, the rotation of the annular gear 47 puts the output shaft 30 constrained thereto in rotation.

In this way, the rotation velocity of the output shaft 30 is reduced with respect to the rotation velocity of the drive shaft of the electric motor 2 by a predetermined quantity

In particular, tests conducted by the Applicant have enabled detecting how the reduction gear 1 according to the present invention allows reduction ratios between 25:1 and 100:1 to be easily obtained with high precision and a high torque gain.

Moreover, given the simplicity of construction and compactness, the reduction gear 1 according to the present invention lends itself to a miniaturized and extremely light construction which allows its use in various fields, such as, for example, in the field of small household appliances, in the automation field, in the aerospace field and in the medical equipment field.

In particular, tests conducted by the applicant have enabled detecting that the reduction gear 1 according to the present invention made with dimensions 42 × 42 × 50 mm and coupled to electric motors of categories NEMA (National Electrical Manufacturers Association) 17 with the results reported below:

| NEMA 17 - no load | |
| --- | --- |
| Input shaft rotation velocity | 500 rpm |
| Output shaft rotation velocity | 5 rpm |
| Max. temperature reached. | +6°C environment |
| Vibrations | Not evaluable |

| NEMA 17 - load 5Nm | |
| --- | --- |
| Input shaft rotation velocity | 500 rpm |
| Output shaft rotation velocity | 5 rpm |
| Max. temperature reached. | +8°C environment |
| Vibrations | Not evaluable |

In particular, the reduction gear 1 according to the embodiments of the present invention is characterized by substantially relevant vibrations and noise and by a low operating temperature. These positive factors are also indicative of a reduced effort of the moving mechanical parts and therefore of an extremely limited wear that guarantees a very high useful life.

The invention thus conceived is susceptible to several modifications and variations, all falling within the scope of the inventive concept.

For example, the pins can have a different shape such as for example they can have a rod shape, with or without spherical ends, or they can comprise a substantially spherical central portion from which two rods extend in diametrically opposite directions.

In a simplified embodiment, the disks 43 can be omitted to the detriment of the reduction efficiency.

The flanges and the central body can have a different shape, for example all the parts of the casing 10 and the interflange 19 can have a cylindrical structure. Preferably, the conformations of the casing 10 and of the interflange 19 are selected corresponding to the conformation (cylindrical, box-like, etc.) of the electric motor with which they are associated.

Naturally, the input shaft 20 and the drive shaft of the electric motor can be coupled together by means of different fastening elements.

Moreover, other embodiments of the reduction gear according to the present invention (not shown) can comprise several reduction stages. For example, a two-stage reduction gear comprises an intermediate gear wheel mounted on an additional cam of the drive shaft and connected to an input gear wheel through a first group of pins and to an output gear wheel through a second group of pins in a manner similar to the one described above. Preferably, each cam is separated from the adjacent cam by a coaxial portion on which a corresponding pair of disks is mounted, which are adapted to house a central portion of the pins of the corresponding group. In this case the central body will comprise two distinct gear portions, one adapted to operate as a stationary annular gear for the input gear wheel and the other one adapted to operate as a stationary annular gear for the intermediate gear wheel.

In this way, even higher reduction ratios are possible with reduction gear performance substantially unchanged. For example, a two-stage reduction gear according to the present invention enables obtaining reduction ratios from 625:1 to 10,000:1.

Similarly, some components can be changed according to the specific fields of application. For example, gaskets, oil seals and/or insulating roller bearings can be used to allow the use in aerospace applications - where the reduction gear can be subjected to high vacuum pressure variations -, or in medical applications - where periodic sterilization of the reduction gear can be envisaged.

Moreover, an encoder can be integrated in the reduction gear to precisely control the rotation angle of the output shaft, for example with automated control systems.

Moreover, all the details can be replaced by other technically equivalent elements. In particular, parts and tolerances of the components can be varied according to the field of application, obtaining a *trade-off* between reduction gear precision and cost (for example by increasing the tolerance values and/or replacing the roller bearings with ball bearings or bushings - bushes).

In practice, the materials used, as well as the contingent shapes and sizes, can be whatever according to the requirements without for this reason departing from the scope of protection of the following claims.

**Claims**

1. A reduction gear (1) of angular velocity comprising:

   - an input shaft (20) configured to be coupled with a drive shaft;
   - an output shaft (30) configured to transmit an angular velocity to a mechanism, the output shaft (30) being coaxial with the input shaft (20), and
   - mechanical system (40) adapted to convert an input angular velocity of the input shaft (20) into an output angular velocity of the output shaft (30), the output angular velocity being lower than the input angular velocity,

   wherein the input shaft (20) comprises a first cam (27) and a second cam (29) having circular cross-sections that are mutually separated along a main axis (X0) of the input shaft (20) from an intermediate portion (28), the first cam (27) having an axis (X1) spaced apart from a main axis (X0) of the input shaft (20) of a first distance (△X1) in a first direction transversal to said main axis (X0), the second cam (29) having an axis (X2) spaced apart from the main axis (X0) of the input shaft (20) of a second distance (△X2) in a second direction different from the first direction, and wherein the mechanical system (40) comprises:

   - an input gear wheel (41) mounted on the first cam (27), and
   - an output gear wheel (45) mounted on the second cam (29), **characterized in that**

   the input gear wheel (41) comprises a plurality of first housings (413) arranged radially with respect to a center of the input gear wheel (41), each first housing (413) having a respective extension axis (H1-6), and the output gear wheel (45) comprising a plurality of second housings (453) arranged radially with respect to a center of the output gear wheel (45), each second housing (453) having a respective extension axis (J1-6), and by comprising

   - a plurality of pins (42), each having a first end (421A) inserted into a respective first housing (413) of the input gear wheel (41) and a second end (421B) opposite the first end (421A) inserted into a respective second housing (453) of the output gear wheel (45), the first end (421A) and the second end (421B) of each pin (42) being free to move within the first housing (413) and the second housing (453), respectively, thus tilting an axis (P) of the pin (42) with respect to the extension axes (H1-6) of the first housings (413) and the extension axes (J1-6) of the second housings (453), and

   wherein the rotation of the input gear wheel (41) drives the output gear wheel (45) through the pins (42).

2. Reduction gear (1) according to claim 1, wherein the first end (421A) and the second end (421B) of each pin (42) are free to move inside the first housing (413) and the second housing (453), respectively, by tilting an axis (P) of the pin (42) by a value comprised between 2° and 8°, preferably 6°, with respect to the respective extension axes (H1-6, J1 -6) of the first housing (413) and of the second housing (453).

3. Reduction gear (1) according to claim 1 or 2, wherein the first end (421A) and the second end (421B) of each pin (42) are free to perform a rotary movement within the respective first housing (413) and second housing (453).

4. Reduction gear (1) according to claim 3, wherein at least one between the first end (421A) and the second end (421B) of each pin (42) is shaped like a spherical cap, and in which each corresponding first housing (413) or second housing (453) is shaped like a cup with size configured to be fitted by the corresponding first or second end (421A, 421B).

5. Reduction gear (1) according to any one of the preceding claims, wherein the intermediate portion (28) has a circular cross-section coaxial with the main axis (X0) of the input shaft (20), and

   wherein each pin (42) comprises a central portion (423) with a spherical cup or spherical segment shape, and

wherein the mechanical system (40) comprises a pair of disks (43) adapted to be fitted on the intermediate portion (43), the disks (43) comprising a plurality of demi-housings (433) arranged radially and such as to define housings configured for receiving the central portion (423) of a respective pin (42) when the disks (43) are coupled together in such a way to allow free movement of the central portion such as to incline the axis (P) of the pin (42) with respect to an extension axis (K1-6) of the demi-housings (433).

6. Reduction gear (1) according to any one of the preceding claims, wherein the axis (X1) of the first cam (27) and the axis (X2) of the second cam (29) are spaced apart from the main axis (X0) of the input shaft (20) in opposite directions one with respect to the other.

7. A reduction gear (1) according to any one of the preceding claims, wherein the mechanical system (40) comprises an input annular gear (155) which is stationary, the input annular gear (155) having a pitch diameter greater than the pitch diameter of the input gear wheel (41) and a greater number of teeth than the input gear wheel (41), and wherein part of the teeth of the input gear wheel (41) engage in a corresponding part of the input annular gear (155) during an eccentric rotation of the input gear wheel (41) around the main axis (X0) of the input shaft (20).

8. Reduction gear (1) according to claim 5, further comprising a casing configured to house at least partially the input shaft (20), the output shaft (30) and the mechanical system (40), wherein the input annular gear (155) is integrated into a portion (15) of the casing (10).

9. Reduction gear (1) according to any one of the preceding claims, wherein the mechanical system (40) comprises an output annular gear (47) mounted on one end (33) of the output shaft (30), the output annular gear (47) having a pitch diameter greater than a pitch diameter of the output gear wheel (45) and a greater number of teeth than the output gear wheel (45), and

wherein part of the teeth of the output gear wheel (45) engage a corresponding part of the output annular gear (47) during an eccentric rotation of the output gear wheel (45) around the main axis (X0) of the input shaft (20).

10. Reduction gear (1) according to any one of the preceding claims, wherein the output shaft (30) comprises a cavity (31) configured to rotatably house one end (23) of the input shaft (20).

11. Reduction gear (1) according to one of claims 5 to 7, wherein the teeth of the gear wheels (41, 45) and of the annular gears (155, 47) are determined by the relation:

$$\begin{cases} x(\theta)=\dfrac{l}{2}\left(\cos\theta-\dfrac{t}{k}\cos(k\theta)\right)+\dfrac{a[t\cos(k\theta)-\cos\theta]}{2\sqrt{1+t^2-2t[\sin\theta\sin(k\theta)+\cos\theta\cos(k\theta)]}} \\ y(\theta)=\dfrac{l}{2}\left(\sin\theta-\dfrac{t}{k}\sin(k\theta)\right)+\dfrac{a[t\sin(k\theta)-\sin\theta]}{2\sqrt{1+t^2-2t[\sin\theta\sin(k\theta)+\cos\theta\cos(k\theta)]}} \end{cases}$$

where $l$ corresponds to the pitch diameter of the annular gear (155, 47), $k$ is greater than number of teeth of gear wheel (41, 45), t is an adjustment parameter of the teeth curve comprised between 0 and 1, and $\theta$ is comprised between 0 and $2\pi$.

12. Reduction gear (1) according to any one of claims 5 to 7, in which the teeth of the gear wheels (41, 45) and of the annular gears (155, 47) are determined by the relation:

$$\begin{cases} \rho(\theta)=\dfrac{l}{2}\lambda(\theta)+\dfrac{a}{2}e^{i\left[arg\left(\frac{d\lambda(\theta)}{d\theta}\right)+\frac{\pi}{2}\right]} \\ \lambda(\theta)=e^{i\theta}-\dfrac{t}{k}e^{ik\theta} \end{cases}$$

where $l$ corresponds to the pitch diameter of the annular gear (155, 47), $k$ corresponds to the number of teeth of the gear wheel (155, 47), *a* corresponds to the tooth diameter of the teeth of the annular gear (155, 47), t is an adjustment parameter of the teeth curve comprised between 0 and 1, and $\theta$ is comprised between 0 and $2\pi$.

**Patentansprüche**

1. Ein Untersetzungsgetriebe (1) für Winkelgeschwindigkeit aufweisend:

 - eine Eingangswelle (20), die derart konfiguriert ist, dass sie mit einer Antriebswelle gekoppelt werden kann;
 - eine Ausgangswelle (30), die derart konfiguriert ist, dass sie eine Winkelgeschwindigkeit an einen Mechanismus überträgt, wobei die Ausgangswelle (30) koaxial mit der Eingangswelle (20) ist, und
 - mechanisches System (40), das geeignet ist, eine Eingangs-Winkelgeschwindigkeit der Eingangswelle (20) in eine Ausgangs-Winkelgeschwindigkeit der Ausgangswelle (30) zu konvertieren, wobei die Ausgangs-Winkelgeschwindigkeit kleiner ist als die Eingangs-Winkelgeschwindigkeit,

 wobei die Eingangswelle (20) einen ersten Nocken (27) und einen zweiten Nocken (29) mit kreisförmigen Querschnitten aufweist, die entlang einer Hauptachse (X0) der Eingangswelle (20) von einem Zwischenabschnitt (28) getrennt sind, wobei der erste Nocken (27) eine Achse (X1) aufweist, die von einer Hauptachse (X0) der Eingangswelle (20) um einen ersten Abstand ($\Delta$X1) in einer ersten Richtung quer zu der Hauptachse (X0) beabstandet ist,
 wobei der zweite Nocken (29) eine Achse (X2) aufweist, die von der Hauptachse (X0) der Eingangswelle (20) um einen zweiten Abstand ($\Delta$X2) in einer zweiten Richtung beabstandet ist, die sich von der ersten Richtung unterscheidet, und

 wobei das mechanische System (40) umfasst:

 - ein Eingangszahnrad (41), das auf dem ersten Nocken (27) montiert ist, und
 - ein Ausgangszahnrad (45), das auf dem zweiten Nocken (29) montiert ist,

 **dadurch gekennzeichnet, dass**
 das Eingangszahnrad (41) eine Vielzahl von ersten Einhausungen (413) umfasst, die radial in Bezug auf eine Mitte des Eingangszahnrads (41) angeordnet sind, wobei jede erste Einhausung (413) eine jeweilige Verlängerungsachse (H1-6) aufweist, und dass das Ausgangszahnrad (45) eine Vielzahl von zweiten Einhausungen (453) umfasst, die radial in Bezug auf eine Mitte des Ausgangszahnrads (45) angeordnet sind, wobei jede zweite Einhausung (453) eine jeweilige Verlängerungsachse (J1-6) aufweist, und dass es umfasst

 - eine Vielzahl von Zapfen (42), die jeweils ein erstes Ende (421A), das in eine entsprechende erste Einhausung (413) des Eingangszahnrads (41) eingeführt ist, und ein zweites Ende (421B) aufweisen, das dem ersten Ende (421A) gegenüberliegt und in eine entsprechende zweite Einhausung (453) des Ausgangszahnrads (45) eingesetzt ist, wobei das erste Ende (421A) und das zweite Ende (421B) jedes Zapfens (42) frei innerhalb der ersten Einhausung (413) bzw. der zweiten Einhausung (453) beweglich sind, wodurch eine Achse (P) des Zapfens (42) in Bezug auf die Verlängerungsachsen (H1-6) der ersten Einhausung (413) und die Verlängerungsachsen (J1-6) der zweiten Einhausung (453) geneigt sind, und

 wobei die Rotation des Eingangszahnrads (41) über die Zapfen (42) das Ausgangszahnrad (45) antreibt.

2. Untersetzungsgetriebe (1) nach Anspruch 1, wobei das erste Ende (421A) und das zweite Ende (421B) jedes Zapfens (42) frei innerhalb der ersten Einhausung (413) bzw. der zweiten Einhausung (453) beweglich sind, indem eine Achse (P) des Zapfens (42) um einen Wert zwischen 2° und 8°, vorzugsweise 6°, in Bezug auf die jeweiligen Verlängerungsachsen (H1-6, J1-6) der ersten Einhausung (413) und der zweiten Einhausung (453) gekippt ist.

3. Untersetzungsgetriebe (1) nach Anspruch 1 oder 2, wobei das erste Ende (421A) und das zweite Ende (421B) jedes Zapfens (42) frei sind, um eine Drehbewegung innerhalb der jeweiligen ersten Einhausung (413) bzw. zweiten Einhausung (453) durchzuführen.

4. Untersetzungsgetriebe (1) nach Anspruch 3, bei dem mindestens eines der ersten (421A) und zweiten (421B) Enden jedes Zapfens (42) wie eine kugelförmige Kappe geformt ist, und bei dem jede entsprechende erste Einhausung (413) oder zweite Einhausung (453) wie eine Schale geformt ist, deren Größe derart gestaltet ist, dass sie an das entsprechende erste oder zweite Ende (421A, 421B) angepasst ist.

5. Untersetzungsgetriebe (1) nach einem der vorhergehenden Ansprüche, wobei der Zwischenabschnitt (28) einen kreisförmigen, koaxial zur Hauptachse (X0) der Eingangswelle (20) angeordneten Querschnitt aufweist, und

   wobei jeder Zapfen (42) einen zentralen Abschnitt (423) in Form einer kugelförmigen Schale oder eines kugelförmigen Segments aufweist, und
   wobei das mechanische System (40) ein Paar Scheiben (43) umfasst, die an den Zwischenabschnitt (43) angepasst sind, wobei die Scheiben (43) eine Vielzahl von Halb-Einhausungen (433) umfassen, die radial angeordnet und derart ausgebildet sind, dass sie Einhausungen definieren, die derart konfiguriert sind, dass sie den zentralen Abschnitt (423) eines jeweiligen Zapfens (42) aufnehmen, wenn die Scheiben (43) derart miteinander gekoppelt sind, dass sie eine freie Bewegung des zentralen Abschnitts ermöglichen, dass die Achse (P) des Zapfens (42) in Bezug auf eine Verlängerungsachse (K1-6) der Halb-Einhausung (433) geneigt ist.

6. Untersetzungsgetriebe (1) nach einem der vorhergehenden Ansprüche, wobei die Achse (X1) des ersten Nockens (27) und die Achse (X2) des zweiten Nockens (29) von der Hauptachse (X0) der Eingangswelle (20) in entgegengesetzten Richtungen zueinander beabstandet sind.

7. Untersetzungsgetriebe (1) nach einem der vorhergehenden Ansprüche, wobei das mechanische System (40) einen stationären Eingangszahnring (155) aufweist, wobei der Eingangszahnring (155) einen Teilkreisdurchmesser aufweist, der größer als der Teilkreisdurchmesser des Eingangszahnrads (41) ist, und eine größere Zähnezahl als das Eingangszahnrad (41) aufweist, und
   wobei ein Teil der Zähne des Eingangszahnrads (41) in einen entsprechenden Teil des Eingangszahnrings (155) während einer exzentrischen Drehung des Eingangszahnrads (41) um die Hauptachse (X0) der Eingangswelle (20) eingreift.

8. Untersetzungsgetriebe (1) nach Anspruch 5, das ferner ein Gehäuse umfasst, das derart konfiguriert ist, dass es zumindest teilweise die Eingangswelle (20), die Ausgangswelle (30) und das mechanische System (40) aufnimmt, wobei der Eingangszahnring (155) in einen Teil (15) des Gehäuses (10) integriert ist.

9. Untersetzungsgetriebe (1) nach einem der vorhergehenden Ansprüche, wobei das mechanische System (40) einen Ausgangszahnring (47) umfasst, der an einem Ende (33) der Ausgangswelle (30) angebracht ist, wobei der Ausgangszahnring (47) einen Teilkreisdurchmesser aufweist, der größer ist als ein Teilkreisdurchmesser des Ausgangszahnrads (45), und eine größere Anzahl von Zähnen als das Ausgangszahnrad (45) hat, und
   wobei ein Teil der Zähne des Ausgangszahnrads (45) während einer exzentrischen Drehung des Ausgangszahnrads (45) um die Hauptachse (X0) der Eingangswelle (20) in einen entsprechenden Teil des Ausgangszahnrings (47) eingreift.

10. Untersetzungsgetriebe (1) nach einem der vorhergehenden Ansprüche, wobei die Ausgangswelle (30) einen Hohlraum (31) aufweist, der derart gestaltet ist, dass er ein Ende (23) der Eingangswelle (20) drehbar aufnimmt.

11. Untersetzungsgetriebe (1) nach einem der Ansprüche 5 bis 7, wobei die Zähne der Zahnräder (41, 45) und der Zahnringe (155, 47) durch die Beziehung bestimmt sind:

$$\begin{cases} x(\theta)=\dfrac{l}{2}\left(\cos\theta-\dfrac{t}{k}\cos(k\,\theta)\right)+\dfrac{a\left[t\cos(k\,\theta)-\cos\theta\right]}{2\sqrt{1+t^2-2t\left[\sin\theta\sin(k\,\theta)+\cos\theta\cos(k\,\theta)\right]}} \\[4mm] y(\theta)=\dfrac{l}{2}\left(\sin\theta-\dfrac{t}{k}\sin(k\,\theta)\right)+\dfrac{a\left[t\sin(k\,\theta)-\sin\theta\right]}{2\sqrt{1+t^2-2t\left[\sin\theta\sin(k\,\theta)+\cos\theta\cos(k\,\theta)\right]}} \end{cases}$$

wobei $l$ dem Teilkreisdurchmesser des Zahnrings (155, 47) entspricht, $k$ größer als die Zähnezahl des Zahnrads (41, 45) ist, wobei $t$ ein Einstellparameter der Verzahnungskurve ist, der zwischen 0 und 1 liegt, und $\theta$ zwischen 0 und $2\pi$ liegt.

**12.** Untersetzungsgetriebe (1) nach einem der Ansprüche 5 bis 7, bei dem die Zähne der Zahnräder (41, 45) und der Zahnringe (155, 47) durch die Beziehung bestimmt sind:

$$\begin{cases} \rho(\theta) = \dfrac{l}{2}\lambda(\theta) + \dfrac{a}{2}e^{i\left[arg\left(\frac{d\lambda(\theta)}{d\theta}\right)+\frac{\pi}{2}\right]} \\[2mm] \lambda(\theta) = e^{i\theta} - \dfrac{t}{k}e^{ik\theta} \end{cases}$$

wobei *l* dem Teilungsdurchmesser des Zahnrings (155, 47) entspricht, *k* der Anzahl der Zähne des Zahnrades (155, 47) entspricht, *a* dem Zahndurchmesser der Zähne des Zahnrings (155, 47) entspricht, wobei *t* ein Einstellparameter der Zahnkurve ist, der zwischen 0 und 1 liegt, und θ zwischen 0 und 2π liegt.

## Revendications

**1.** - Engrenage de réduction (1) de vitesse angulaire comprenant :

- un arbre d'entrée (20) configuré pour être accouplé à un arbre d'entraînement ;
- un arbre de sortie (30) configuré pour transmettre une vitesse angulaire à un mécanisme, l'arbre de sortie (30) étant coaxial à l'arbre d'entrée (20) ; et
- un système mécanique (40) apte à convertir une vitesse angulaire d'entrée de l'arbre d'entrée (20) en une vitesse angulaire de sortie de l'arbre de sortie (30), la vitesse angulaire de sortie étant inférieure à la vitesse angulaire d'entrée,

l'arbre d'entrée (20) comprenant une première came (27) et une seconde came (29) ayant des sections transversales circulaires qui sont mutuellement séparées le long d'un axe principal (X0) de l'arbre d'entrée (20) par une partie intermédiaire (28), la première came (27) ayant un axe (X1) espacé d'un axe principal (X0) de l'arbre d'entrée (20) d'une première distance (ΔX1) dans une première direction transversale audit axe principal (XO), la seconde came (29) ayant un axe (X2) espacé de l'axe principal (X0) de l'arbre d'entrée (20) d'une seconde distance (ΔX2) dans une seconde direction différente de la première direction, et le système mécanique (40) comprenant :

- une roue d'engrenage d'entrée (41) montée sur la première came (27) ; et
- une roue d'engrenage de sortie (45) montée sur la seconde came (29),

**caractérisé par le fait que**
la roue d'engrenage d'entrée (41) comprend une pluralité de premiers logements (413) disposés radialement par rapport à un centre de la roue d'engrenage d'entrée (41), chaque premier logement (413) ayant un axe d'extension respectif (H1-6), et
la roue d'engrenage de sortie (45) comprend une pluralité de seconds logements (453) disposés radialement par rapport à un centre de la roue d'engrenage de sortie (45), chaque second logement (453) ayant un axe d'extension respectif (J1-6), et
**par le fait que** l'engrenage de réduction comprend

- une pluralité de broches (42), chacune ayant une première extrémité (421A) introduite dans un premier logement respectif (413) de la roue d'engrenage d'entrée (41) et une seconde extrémité (421B) opposée à la première extrémité (421A) introduite dans un second logement respectif (453) de la roue d'engrenage de sortie (45), la première extrémité (421A) et la seconde extrémité (421B) de chaque broche (42) étant libres de se déplacer à l'intérieur respectivement du premier logement (413) et du second logement (453), inclinant ainsi un axe (P) de la broche (42) par rapport aux axes d'extension (H1-6) des premiers logements (413) et aux axes d'extension (J1-6) des seconds logements (453), et

la rotation de la roue d'engrenage d'entrée (41) entraînant la roue d'engrenage de sortie (45) par l'intermédiaire des broches (42).

**2.** - Engrenage de réduction (1) selon la revendication 1, dans lequel la première extrémité (421A) et la seconde extrémité (421B) de chaque broche (42) sont libres de se déplacer à l'intérieur respectivement du premier logement (413) et du second logement (453), par inclinaison d'un axe (P) de la broche (42) d'une valeur comprise entre 2° et 8°, de préférence 6°, par rapport aux axes d'extension respectifs (H1-6, J1-6) du premier logement (413) et du second logement (453).

**3.** - Engrenage de réduction (1) selon l'une des revendications 1 ou 2, dans lequel la première extrémité (421A) et la seconde extrémité (421B) de chaque broche (42) sont libres d'effectuer un mouvement de rotation à l'intérieur des premier logement (413) et second logement (453) respectifs.

**4.** - Engrenage de réduction (1) selon la revendication 3, dans lequel au moins l'une entre la première extrémité (421A) et la seconde extrémité (421B) de chaque broche (42) a la forme d'un capuchon sphérique, et dans lequel chaque premier logement (413) ou second logement (453) correspondant a la forme d'une coupelle avec une dimension configurée pour être ajustée à la première ou seconde extrémité correspondante (421A, 421B).

**5.** - Engrenage de réduction (1) selon l'une quelconque des revendications précédentes, dans lequel la partie intermédiaire (28) a une section transversale circulaire coaxiale à l'axe principal (X0) de l'arbre d'entrée (20), et

dans lequel chaque broche (42) comprend une partie centrale (423) avec une forme de coupelle sphérique ou de segment sphérique, et
dans lequel le système mécanique (40) comprend une paire de disques (43) aptes à être adaptés sur la partie intermédiaire (43), les disques (43) comprenant une pluralité de demi-logements (433) disposés radialement et de façon à définir des logements configurés pour recevoir la partie centrale (423) d'une broche respective (42) lorsque les disques (43) sont couplés ensemble de manière à permettre un mouvement libre de la partie centrale de façon à incliner l'axe (P) de la broche (42) par rapport à un axe d'extension (K1-6) des demi-logements (433).

**6.** - Engrenage de réduction (1) selon l'une quelconque des revendications précédentes, dans lequel l'axe (X1) de la première came (27) et l'axe (X2) de la seconde came (29) sont espacés de l'axe principal (X0) de l'arbre d'entrée (20) dans des directions opposées l'une par rapport à l'autre.

**7.** - Engrenage de réduction (1) selon l'une quelconque des revendications précédentes, dans lequel le système mécanique (40) comprend une engrenage annulaire d'entrée (155) qui est fixe, l'engrenage annulaire d'entrée (155) ayant un diamètre primitif supérieur au diamètre primitif de la roue d'engrenage d'entrée (41) et un nombre de dents supérieur à celui de la roue d'engrenage d'entrée (41), et
dans lequel une partie des dents de la roue d'engrenage d'entrée (41) s'engage dans une partie correspondante de l'engrenage annulaire d'entrée (155) pendant une rotation excentrique de la roue d'engrenage d'entrée (41) autour de l'axe principal (X0) de l'arbre d'entrée (20).

**8.** - Engrenage de réduction (1) selon la revendication 5, comprenant en outre un carter configuré pour recevoir au moins partiellement l'arbre d'entrée (20), l'arbre de sortie (30) et le système mécanique (40), l'engrenage annulaire d'entrée (155) étant intégré dans une partie (15) du carter (10).

**9.** - Engrenage de réduction (1) selon l'une quelconque des revendications précédentes, dans lequel le système mécanique (40) comprend un engrenage annulaire de sortie (47) monté sur une extrémité (33) de l'arbre de sortie (30), l'engrenage annulaire de sortie (47) ayant un diamètre primitif supérieur à un diamètre primitif de la roue d'engrenage de sortie (45) et un nombre de dents supérieur à celui de la roue d'engrenage de sortie (45), et
dans lequel une partie des dents de la roue d'engrenage de sortie (45) engage une partie correspondante de l'engrenage annulaire de sortie (47) pendant une rotation excentrique de la roue d'engrenage de sortie (45) autour de l'axe principal (X0) de l'arbre d'entrée (20).

**10.** - Engrenage de réduction (1) selon l'une quelconque des revendications précédentes, dans lequel l'arbre de sortie (30) comprend une cavité (31) configurée pour recevoir de manière rotative une extrémité (23) de l'arbre d'entrée (20).

**11.** - Engrenage de réduction (1) selon l'une quelconque des revendications 5 à 7, dans lequel les dents des roues d'engrenage (41, 45) et des engrenages annulaires (155, 47) sont déterminées par la relation :

$$\begin{cases} x(\theta)=\dfrac{l}{2}\left(\cos\theta-\dfrac{t}{k}\cos(k\theta)\right)+\dfrac{a\left[t\cos(k\theta)-\cos\theta\right]}{2\sqrt{1+t^2-2t\left[\sin\theta\sin(k\theta)+\cos\theta\cos(k\theta)\right]}} \\ y(\theta)=\dfrac{l}{2}\left(\sin\theta-\dfrac{t}{k}\sin(k\theta)\right)+\dfrac{a\left[t\sin(k\theta)-\sin\theta\right]}{2\sqrt{1+t^2-2t\left[\sin\theta\sin(k\theta)+\cos\theta\cos(k\theta)\right]}} \end{cases}$$

où $l$ correspond au diamètre primitif l'engrenage annulaire (155, 47), $k$ est supérieur au nombre de dents de la roue d'engrenage (41, 45), t est un paramètre d'ajustement de la courbe des dents compris entre 0 et 1, et $\theta$ est compris entre 0 et 2 $\pi$.

12. - Engrenage de réduction (1) selon l'une quelconque des revendications 5 à 7, dans lequel les dents des roues d'engrenage (41, 45) et des engrenages annulaires (155, 47) sont déterminées par la relation :

$$\begin{cases} \rho(\theta)=\dfrac{l}{2}\lambda(\theta)+\dfrac{a}{2}\mathrm{e}^{i\left[arg\left(\frac{d\lambda(\theta)}{d\theta}\right)+\frac{\pi}{2}\right]} \\ \lambda(\theta)=\mathrm{e}^{i\theta}-\dfrac{t}{k}\mathrm{e}^{ik\theta} \end{cases}$$

où $l$ correspond au diamètre primitif de l'engrenage annulaire (155, 47), $k$ correspond au nombre de dents de la roue d'engrenage (155, 47), $a$ correspond au diamètre de dent des dents de l'engrenage annulaire (155, 47), t est un paramètre d'ajustement de la courbe des dents compris entre 0 et 1, et $\theta$ est compris entre 0 et 2π.

Fig.1

Fig.2

Fig.3

Fig.4A

Fig.4B

15

$X_0$

155

155

Fig.5A

V

V

153

155

15

$X_0$

151

Fig.5B

Fig.6A

Fig.6B

EP 3 667 121 B1

Fig.7

E-E          D-D          C-C          B-B

23

Fig.8A

Fig.8B

Fig.9

Fig.10A

Fig.10B

XI

J6

451

J5

45

453

J1

X2

J4

J2

Fig.11A

XI

J3

X2

451

45

J6

J3

453

Fig.11B

Fig.12A

Fig.12B

XIII

47

X₀

Fig.13A

XIII

X₀

47

Fig.13B

XIV

30

W

31

33

Fig.14A

XIV

35

30

33

Fig.14B

W

31

**EP 3 667 121 B1**

**REFERENCES CITED IN THE DESCRIPTION**

**Patent documents cited in the description**

- EP 0300108 A
- EP 0738841 A
- EP 2400184 A